# EUROPEAN PATENT SPECIFICATION

(11) **EP 3 578 058 B1**
(45) Date of publication and mention of the grant of the patent: **11.12.2024**
(21) Application number: 18747425.9
(22) Date of filing: 05.02.2018
(51) Int. Cl.: A23L 7/157, A23L 35/00, A23L 13/00, A23L 29/212, A23L 29/225, A23P 20/10

(54) **BREADCRUMB MIX**
BROTKRUMENGEMISCH
MÉLANGE DE CHAPELURE

(30) Priority: 06.02.2017 JP 2017019214
(43) Date of publication of application: 11.12.2019
(73) Proprietor: Nisshin Seifun Welna Inc., Tokyo 101-8441 (JP)
(72) Inventor: YAMAZAKI, Shuhei, Tokyo 103-8544 (JP); OMURA, Masato, Tokyo 103-8544 (JP); SAKAKIBARA, Michihiro, Tokyo 103-8544 (JP)
(74) Representative: Wächtershäuser & Hartz Patentanwaltspartnerschaft mbB
(86) International application number: PCT/JP2018/003715
(87) International publication number: WO 2018/143447

(56) References cited:
- EP-A1- 1 186 243
- JP-A- 2000 000 072
- JP-A- 2012 039 913
- JP-A- 2012 039 913
- JP-A- 2012 161 274
- JP-A- 2012 161 274
- JP-A- H0 975 024
- JP-A- H0 975 024
- JP-A- H03 259 053
- JP-A- H03 259 053
- JP-A- H08 228 705
- JP-A- H08 228 705
- JP-A- H08 228 706
- JP-A- H08 228 706
- JP-B2- 5 917 199
- US-A- 4 260 637
- "From Milk By-Products to Milk Ingredients : Upgrading the Cycle", 2 May 2014, JOHN WILEY & SONS, LTD, Chichester, UK, ISBN: 978-0-470-67222-8, article RUUD DE BOER: "Information Sheets -Milk -Lipids -Cheese -Whey", pages: 208 - 261, XP055605158, DOI: 10.1002/9781118598634.oth
- "Proteins as Human Food: Proceedings of the Sixteenth Easter School in Agricultural Science, University of Nottingham, 1969", 1 January 1970, BUTTERWORTHS, London, ISBN: 978-0-408-32000-9, article SHRIMPTON D. H.: "Eggs and poultry", pages: 225 - 241, XP093096007

## Description

### Technical Field

This invention relates to a breadcrumb mix comprising a breadcrumb modifier, a method of making the breadcrumb mix and to a method of making a breaded and cooked food by using the breadcrumb mix.

### Background Art

Breaded and fried food may be typically prepared as follows; a food item, for example, raw meat of a domestic animal such as pork, beef, or chicken, raw seafood such as horse mackerel or salmon, or a vegetable(s) is first dredged with wheat flour, dipped in an egg wash or batter solution, attached with breadcrumbs, and then deep-fried in oil. This is, however, a very cumbersome operation, which has been raising the need for easier and simpler operations of making breaded and fried food.

Certain breadcrumb mixes that can be directly attached to food items and deep-fried in oil to thereby make breaded and fried food have been suggested so far. Patent Literature 1 describes a batter mix for breaded and fried food in which breadcrumbs are blended with one or more selected from paste adhesive, pregelatinized starch, dried egg white, and dried whole egg. Patent Literature 2 describes a breadcrumb mix in which dry breadcrumbs are blended with pregelatinized starch and/or powdered protein, and a polysaccharide thickener. Patent Literature 3 describes processed breadcrumbs prepared by spraying the surfaces of dry breadcrumbs with a solution containing at least one high-viscosity material and protein selected from the group consisting of saccharides and protein hydrolysates and drying the obtained breadcrumbs. Patent Literature 4 describes processed breadcrumbs attached with powdered starch and/or powdered protein, which is prepared by blending fresh breadcrumbs with powdered starch and/or powdered protein and drying the obtained breadcrumbs. Patent Literature 5 describes a breadcrumb mix for food, like fried cuttlefish, containing 1 to 20% of wheat gluten, 10 to 60% of starch, and 3 to 12% of powdered soy sauce, and having a ratio of contents between wheat gluten and starch ranging from 0.5 to 60 (weight ratio). Patent Literature 6 relates to a dry, self-sticking bread crumb composition which adheres when coated onto a moistened comestible. The bread crumb composition comprises bread crumbs and an adhesive containing a protein and optionally a starch and/or a gum. The bread crumbs have a critical particle size for uniform adhesion on the comestible during coating, while the adhesive is preferably applied to the surface of the crumbs with an edible oil.

### Citation List

### Patent Literature

Patent Literature 1: JP S55-150870 A
Patent Literature 2: JP 5417281 B2
Patent Literature 3: JP H08-228706 A
Patent Literature 4: JP 3035287 B2
Patent Literature 5: JP 2015-146770 A
Patent Literature 6: US 4260637 A

### Summary of Invention

### Technical Problem

There are issues to be addressed with the existing breadcrumb mixes described thus far, which are, for example, ingredients of the mixes may be separated during storage, or the mixes may result in poor attachment property to food items. The fried food made with such breadcrumb mixes was not really satisfactory in terms of appearance and texture. There is a demand to provide breadcrumb mixes that successfully make breaded and cooked food having better appearance and texture and high quality.

### Solution to Problem

As a result of intensive studies, the inventors of this invention found that a breadcrumb mix obtained by preparing a mixture that contains a protein material, a thickener, and an oil or fat respectively in certain amounts and mixing typical breadcrumbs with the mixture at a certain mixing ratio is attached to food items well. The inventors also found that breaded and cooked food with good appearance and texture as well as high quality can be obtained by attaching food items such as seafood or meat directly with the breadcrumb mix and heat-cooking the mix-attached food items.

Accordingly, this invention provides a breadcrumb mix comprising breadcrumbs blended with a breadcrumb modifier, the breadcrumb modifier comprising (a) from 20 to 90 mass% of a protein material, (b) from 1 to 60 mass% of a thickener, and (c) from 0.1 to 5 mass% of an oil or fat, wherein in the total amount of the breadcrumb mix, the contents of the protein material relative to 100 parts by mass of the breadcrumbs is from 2.75 to 22.5 parts by mass, the content of the thickener relative to 100 parts by mass of the breadcrumbs is from 0.5 to 15 parts by mass, and the content of the oil or fat relative to 100 parts by mass of the breadcrumbs is from 0.015 to 1.2 parts by mass, wherein the protein material is one or more selected from the group consisting of gluten and dried egg white, and the thickener is one or more selected from the group consisting of pregelatinized starch and glucomannan.

This invention further provides a method of making the breadcrumb mix of the invention, comprising blending 100 parts by mass of breadcrumbs with from 5 to 40 parts by mass of the breadcrumb modifier.

This invention further provides a method of making breaded and cooked food, comprising: directly attaching the breadcrumb mix made by the method of the invention to the surface of a food item; and baking or frying, using oil, the food item to which the breadcrumb mix has been attached.

The invention is as defined in the appended claims.

### Advantageous Effects of Invention

The breadcrumb mix made by using the breadcrumb modifier according to this invention can be attached to food items well. When the breadcrumb mix is simply attached to the food items directly, their surfaces may be coated with a substantial amount of the mix. When the food item attached with the breadcrumb mix is cooked, high-quality breaded and cooked food with good appearance and texture can be made, which shows a uniform and good color after being fried, has volumious and good *"Kendachi"* (Japanese term signifying breadcrumbs standing upright like swords), provides crispy coating, and maintains original flavors of food item used. This breadcrumb mix may be available for various cooking such as deep-frying with abundant oil, or baking with a small amount of oil.

### Description of Embodiments

Herein described is a breadcrumb modifier for use in the making of a breadcrumb mix and a breadcrumb mix made by using the breadcrumb modifier. The breadcrumb modifier contains a protein material, a thickener, and an oil or fat. The breadcrumb mix according to this invention can be obtained by mixing the breadcrumb modifier with breadcrumbs. The obtained breadcrumb mix is for use in the making of breaded and cooked food.

The "modification" of breadcrumbs described herein may indicate improved property of breadcrumbs used as coating, for example, increased attachment property to food items and/or improved appearance and texture of a coating of breaded and cooked food obtained by cooking a breadcrumb-attached food item.

The protein material contained in the breadcrumb modifier comprised in the breadcrumb mix according to this invention is one or more selected from the group consisting of gluten and dried egg white. One of these protein materials may be singly used, or two of them may be used in combination. The content of the protein material in the breadcrumb modifier comprised in the breadcrumb mix according to this invention is from 20 to 90 mass%, preferably from 55 to 80 mass%, relative to the total amount of the modifier. When the content of the protein material is less than 20 mass%, the breadcrumb mix obtained by using the breadcrumb modifier may be poorly attached to food items, and a breaded and cooked food obtained by using this breadcrumb mix may be easily burnt or likely to shrink. When the content of the protein material surpasses 90 mass%, on the other hand, the obtained breaded and cooked food may result in a hard texture.

The thickener contained in the breadcrumb modifier comprised in the breadcrumb mix according to this invention is one or more selected from the group consisting of pregelatinized starch and glucomannan. One of these thickeners may be singly used, or two of them may be used in combination. The content of the thickener in the breadcrumb modifier comprised in the breadcrumb mix according to this invention is from 1 to 60 mass%, preferably from 10 to 40 mass%, relative to the total amount of the modifier. When the content of the thickener is less than 1 mass%, the obtained breaded and cooked food may be easily burnt. When the content of the thickener surpasses 60 mass%, on the other hand, the obtained breaded and cooked food may result in a hard texture.

The oil or fat included in the breadcrumb modifier comprised in the breadcrumb mix according to this invention is not particularly limited and may be any edible oils or fats in a liquid or solid form. Preferable examples of the oil or fat may be vegetable oil or fat including soybean oil, rapeseed oil, corn oil, palm oil, and shortening, higher fatty acids, sucrose fatty acid esters, and monoglyceride. Among these examples, vegetable oil or fat may be particularly preferable, a specific example thereof may be shortening. The oil or fat may preferably have a melting point of, approximately, from-10°C to 40°C. The melting point of oil or fat in this description refers to an open-tube melting point pursuant to the Standard Methods for the Analysis of Fats, Oils and Related Materials (2.2.4.2-1996). One of the aforementioned oils or fats may be singly used, or two or more of them may be used in combination. The content of the oil or fat in the breadcrumb modifier comprised in the breadcrumb mix according to this invention is from 0.1 to 5 mass%, preferably be from 0.3 to 3 mass%, relative to the total amount of the modifier. The oil or fat content less than 0.1 mass% may increase the likelihood of the breadcrumb modifier being separated from the breadcrumbs. The oil or fat content greater than 5 mass% may lead to forming lumps or a mass of the breadcrumb modifier, and inhomogeneity of the breadcrumb mix made by using the breadcrumb modifier.

The average particle sizes of the protein material, thickener, and oil or fat contained in the breadcrumb modifier may be from 20 µm to 500 µm, preferably from 30 µm to 300 µm. In a case where any one(s) of the protein material, thickener, and oil have an average particle size(s) beyond the before-mentioned numerical ranges, the breadcrumb modifier may be likely to separate from the breadcrumbs.

If necessary, an additional material(s) may be further added to the breadcrumb modifier to an extent that does not compromise a desirable appearance and texture expected of a breaded food prepared with the breadcrumb mix made by using the breadcrumb modifier. Examples of the additional material may include grain flour, starch, seasoning, emulsifier, sweetener, acidulant, common salt, spice, pigment, enzyme, and perfumery. The content of the additional material(s) in the breadcrumb modifier may be less than or equal to 50 mass%, preferably be less than or equal to 20 mass%, relative to the total amount of this modifier. In other words, the total content of the protein material, thickener, and oil or fat added to the breadcrumb modifier comprised in the breadcrumb mix according to this invention may preferably be from 50 to 100 mass%, more preferably be from 80 to 100 mass%.

The breadcrumb modifier is prepared by mixing the protein material, thickener, and oil or fat, and if necessary, the additional material(s). The breadcrumb modifier comprised in the breadcrumb mix according to this invention may preferably be in the form of powder.
A means for preparing the powdered breadcrumb modifier may include blending the powdered protein material, thickener, and oil or fat, stirring the powdered protein material and thickener while adding a liquid oil thereto to form powder, or powdering a mixture of the protein material, thickener, and oil or fat. The average particle size of the obtained powder may be from 20 µm to 500 µm, preferably from 30 um to 300 µm.

The breadcrumb modifier is used to make the breadcrumb mix according to this invention. The breadcrumb mix according to this invention thus contains breadcrumbs and the breadcrumb modifier. The breadcrumb mix according to this invention is obtainable by blending 100 parts by mass of breadcrumbs with from 5 to 40 parts by mass of the breadcrumb modifier. This blending action allows the breadcrumb modifier comprised in the breadcrumb mix according to this invention to attach to the surfaces of the breadcrumbs. Thus, the breadcrumb mix according to this invention may be processed breadcrumbs to which the breadcrumb modifier has been attached.

In the making of the breadcrumb mix according to this invention, the protein material, thickener, and oil or fat, and if necessary, any additional material(s) are blended to prepare the breadcrumb modifier beforehand, and the prepared breadcrumb modifier is then blended with the breadcrumbs. The breadcrumb modifier thus prepared beforehand may preferably be powder. The breadcrumb modifier thus prepared beforehand may preferably be a homogenous mixture prepared by mixing the protein material, thickener, and oil or fat to evenly disperse in the mixture.

The breadcrumbs used to make the breadcrumb mix according to this invention may be selected from various types of breadcrumbs typically used. The breadcrumbs may be made by using materials typically used to make breadcrumbs, such as wheat flour, yeast, sugar, common salt, and oil or fat, through a roasting method, or a electrode method. The materials and the method employed, however, are not particularly limited. The breadcrumbs used to make the breadcrumb mix according to this invention may be either dry breadcrumbs or fresh breadcrumbs, however, dry breadcrumbs may preferably be used. The content of the breadcrumbs in the breadcrumb mix according to this invention (in terms of dry breadcrumbs) may preferably be from 71 to 95 mass%, preferably be from 80 to 93 mass%, relative to the total amount of the mix.

The content of the breadcrumb modifier in the breadcrumb mix according to this invention may be from 5 to 40 parts by mass, preferably from 7.5 to 25 parts by mass, more preferably from 10 to 25 parts by mass, relative to 100 parts by mass of the breadcrumbs (in terms of dry breadcrumbs, the same applies to the description hereinafter) . In a case where the content of the breadcrumb modifier is less than 5 parts by mass or greater than 40 parts by mass relative to 100 parts by mass of the breadcrumbs, breaded and cooked food prepared with the obtained breadcrumb mix may fail to improve in appearance and texture sufficiently.

In the total amount of the breadcrumb mix according to this invention, the contents of the protein material relative to 100 parts by mass of the breadcrumbs is from 2.75 to 22.5 parts by mass, even more preferably from 5.0 to 20 parts by mass. The content of the thickener relative to 100 parts by mass of the breadcrumbs is 0.5 to 15 parts by mass, even more preferably from 1 to 10 parts by mass. The content of the oil or fat relative to 100 parts by mass of the breadcrumbs is 0.015 to 1.2 parts by mass, even more preferably from 0.03 to 0.75 parts by mass. When the breadcrumb modifier according to this invention includes no additional ingredient other than the protein material, thickener, or oil or fat, the total content of the protein material, thickener, and oil or fat in the breadcrumb mix according to this invention may be from 5 to 40 parts by mass, preferably from 7.5 to 25 parts by mass, more preferably from 10 to 25 parts by mass, relative to 100 parts by mass of the breadcrumbs.

If necessary, an additional material(s) may be further added to the breadcrumb mix according to this invention to an extent that does not compromise a desirable appearance and texture expected of a breaded food prepared with the breadcrumb mix according to this invention. Examples of the additional material may include grain flour, starch, seasoning, emulsifier, sweetener, acidulant, common salt, spice, pigment, enzyme, and perfumery. The additional material(s) may be added beforehand to the breadcrumb modifier or may be added when the breadcrumbs are blended with the breadcrumb modifier. In view of homogeneity of the breadcrumb mix and easiness to make the breadcrumb mix, the additional material(s) may preferably be added beforehand to the breadcrumb modifier. The content of the additional material(s) in the breadcrumb mix according to this invention may be less than or equal to 20 parts by mass, preferably be less than or equal to 12.5 parts by mass, relative to 100 parts by mass of the breadcrumbs.

In the making of the breadcrumb mix according to this invention, the breadcrumbs are mixed with the breadcrumb modifier and then the mixture may be dried or granulated, if necessary. When the breadcrumb material of the breadcrumb mix is fresh breadcrumbs, the obtained mixture may preferably be dried. The water content of the breadcrumb mix according to this invention may be from 2 to 20 mass%. In view of preservability and texture, however, the water content may preferably be from 3 to 15 mass%. While the particle size of the breadcrumb mix according to this invention is not particularly limited, the breadcrumb mix may preferably have an average particle size of from 100 µm to 7 mm, more preferably have an average particle size of from 200 µm to 5 mm.

The average particle size in this description refers to a mean volume diameter (MV) in the laser diffraction and scattering method.

The breadcrumb mix according to this invention is used to make breaded and cooked food. The breaded and cooked food may be either fried food or a non-fried food.

The breadcrumb mix according to this invention may be available for various cooking such as deep-frying with abundant oil, or baking with a small amount of oil. In case of baking with a small amount of oil, the breadcrumb mix according to this invention is attached to the surface of a food item, for example, meat of a domestic animal or seafood directly (without flouring or dipping in an egg wash or batter), then the food item is baked by using a pot, frypan, steel plate, or oven with a small amount of oil, for example, with oil spread thereon, to thereby make a non-fried breaded food. In view of reducing the intake of oil, the amount of oil used for baking may be 50 mL or less, preferably 30 mL or less, relative to 100 g of a food item, such as seafood or meat. When the food item is deep-fried with abundant oil, the breadcrumb mix according to this invention is directly attached to the food item (without flouring or dipping in an egg wash or batter), and the mix-attached food item is then put in a frying pot adequately filled with oil to deep-fry through a method typically used, to thereby make a fried breaded food. The oil used for baking or deep-frying is not particularly limited and may be any edible oils typically used, for example, vegetable oils including rapeseed oil, soybean refined oil, rice-bran oil, and sesame oil, and animal oils including lard.

The breadcrumb mix according to this invention can be attached to food items well, and a substantial amount of the breadcrumb mix may remain attached to the food items even after they are deep-fried with abundant oil. The breadcrumb mix according to this invention may successfully provide high-quality breaded and cooked food with good appearance and texture, which shows a uniform and good color after being fried, has voluminous and good "Kendachi" (Japanese term signifying breadcrumbs standing upright like swords), provides crispy coating, and maintains original flavors of food item used.

This invention is hereinafter described in further detail using examples. This invention includes but is not limited to these examples.

### Examples

Below are listed the materials used to make breadcrumb mixes according to the examples.
Wheat gluten ("A-Glu G" supplied by GLICO NUTRITION CO., LTD.)
Dried egg white ("Dried white egg" supplied by Kewpie Corporation)
Pregelatinized starch ("Matsunolin" supplied by Matsutani Chemical Industry Col, Ltd.)
Non-pregelatinized starch ("Nisshoku Corn Starch" supplied by NIHON SHOKUHIN KAKO CO., LTD.)
Glucomannan ("Super Mannan" supplied by Ogino Shoten KK)
Powdered oil or fat ("Shortening" supplied by "TAIYO YUSHI CORP.")
Wheat flour ("Flour" supplied by Nisshin Seifun Group Inc.)
Breadcrumbs ("Dried breadcrumbs" supplied by FRYSTAR)

### (Production Examples 1 - 4)

A protein material (wheat gluten or dried egg white), a thickener (glucomannan or pregelatinized starch), and powdered oil or fat were evenly mixed, respectively, in amounts shown in Table 1 to obtain mixtures (breadcrumb modifiers). Dried breadcrumbs and the mixtures were mixed at the ratio of 100 : 20 (mass ratio) to obtain breadcrumb mixes.

### (Comparative examples 1 - 7)

The materials shown in Table 1 were evenly mixed to obtain mixtures not containing one of the protein material, thickener, and powdered oil or fat. Dried breadcrumbs and the mixtures were mixed at the ratio of 100 : 20 (mass ratio) to obtain breadcrumb mixes.

### (Test Example 1)

The breadcrumb mixes of the production examples 1 to 4 and the comparative examples 1 to 7 were flatly spread in trays, and pieces of pork loin (approximately 1.2 cm in thickness, approximately 100 g per piece) were placed thereon and turned upside down several times to attach the mixes to all over their surfaces. The obtained pieces were deep-fried for three minutes in an oil pan heated to 170°C to obtain pork cutlets. The obtained pork cutlets were subjected to the following evaluation in regard to their appearances and textures, which was conducted by 10 trained panelists. Then, average scores were calculated. Table 1 shows an obtained result.

### (Evaluation criteria for appearance)

Grade 5: Very good; meat overall evenly coated with the breadcrumb, good Kendachi, even color of the fried food
Grade 4: Good; meat overall coated with the breadcrumb, good Kendachi, almost even color of the fried food
Grade 3: Fair; meat partly thinly coated with the breadcrumb, almost even color of the fried food.
Grade 2: Bad; meat partly thinly coated with the breadcrumb, uneven color of the fried food.
Grade 1: Very bad; meat partly thinly coated with the breadcrumb or partly breadcrumb removing from the meat, uneven color of the fried food.

### (Evaluation criteria for texture)

Grade 5: Very good; very crispy texture that goes well with meat's flavor
Grade 4: Good; rather crispy texture that goes with meat's flavor
Grade 3: Fair; rather unsatisfactory crispiness, rather hard meat
Grade 2: Bad; unsatisfactory crispiness, hard meat
Grade 1: Very bad; no crispness, dry and hard meat

**[Table 1]**

| Mixture Composition (mass%) | Production examples | | | | comparative examples | | | | | | |
|---|---|---|---|---|---|---|---|---|---|---|---|
| | 1 | 2 | 3 | 4 | 1 | 2 | 3 | 4 | 5 | 6 | 7 |
| Wheat gluten | 70 | 70 | | | 70 | | 70 | 70 | 30 | 99 | |
| Dried egg white | | | 70 | 70 | | 49 | | | | | |
| Glucomannan | 29 | | 29 | | | | 30 | | | | |
| Pregelatinized starch | | 29 | | 29 | | | | 30 | 70 | | 99 |
| Non-pregelatinized starch | | | | | 29 | 50 | | | | | |
| Powdered oil or fat | 1 | 1 | 1 | 1 | 1 | 1 | | | | 1 | 1 |
| Total | 100 | 100 | 100 | 100 | 100 | 100 | 100 | 100 | 100 | 100 | 100 |
| Mixing ratio of breadcrumbs and mixture | 100 : 20 | 100 : 20 | 100 : 20 | 100 : 20 | 100 : 20 | 100 : 20 | 100 : 20 | 100 : 20 | 100 : 20 | 100 : 20 | 100 : 20 |
| Appearance | 4.4 | 4.6 | 4.3 | 4.4 | 2.8 | 2.5 | 2.5 | 2.5 | 2.3 | 2.5 | 1.9 |
| Texture | 4.4 | 4.7 | 4.2 | 4.4 | 3.2 | 2.7 | 2.7 | 2.2 | 2.6 | 1.8 | 2.2 |

### (Test Example 2)

Breadcrumb mixes 1 to 6 were made similarly to the production examples 1 to 4, except that the mixture compositions were changed as shown in Table 2. As in the test example 1, pork cutlets were obtained with these mixes and then evaluated. Table 2 shows an obtained result. Table 2 shows the result of the making example 1 again. Breadcrumb mixes 1 and 6 in Table 2 are comparative examples which fall outside the scope of the present invention.

**[Table 2]**

| Mixture Composition (mass%) | Mix | | | | | | |
|---|---|---|---|---|---|---|---|
| | 1 | 2 | 3 | Production example 1 | 4 | 5 | 6 |
| Wheat gluten | 17 | 20 | 55 | 70 | 80 | 90 | 93 |
| Pregelatinized starch | 29 | 29 | 29 | 29 | 19 | 9 | 6 |
| Powdered oil or fat | 1 | 1 | 1 | 1 | 1 | 1 | 1 |
| Wheat flour | 53 | 50 | 15 | - | - | - | - |
| Total | 100 | 100 | 100 | 100 | 100 | 100 | 100 |
| Mixing ratio of breadcrumbs and mixture | 100 : 20 | 100 : 20 | 100 : 20 | 100 : 20 | 100 : 20 | 100 : 20 | 100 : 20 |
| Appearance | 3.4 | 3.8 | 4.2 | 4.4 | 4.4 | 4.2 | 3.6 |
| Texture | 3.1 | 3.7 | 4.1 | 4.4 | 4.1 | 3.8 | 2.9 |

### (Test Example 3)

Breadcrumb mixes 7 to 12 were made similarly to the production examples 1 to 4, except that the mixture compositions were changed as shown in Table 3. As in the test example 1, pork cutlets were obtained with these mixes and then evaluated. Table 3 shows an obtained result. Table 3 shows the result of the making example 1 again. Breadcrumb mixes 7, 8 and 12 in Table 3 are comparative examples which fall outside the scope of the present invention.

**[Table 3]**

| Mixture Composition (mass%) | Mix | | | | | | |
|---|---|---|---|---|---|---|---|
| | 7 | 8 | 9 | Production example 1 | 10 | 11 | 12 |
| Wheat gluten | 70 | 70 | 70 | 70 | 59 | 39 | 33 |
| Pregelatinized starch | 0.5 | 1 | 10 | 29 | 40 | 60 | 66 |
| Powdered oil or fat | 1 | 1 | 1 | 1 | 1 | 1 | 1 |
| Wheat flour | 28.5 | 28 | 19 | - | - | - | - |
| Total | 100 | 100 | 100 | 100 | 100 | 100 | 100 |
| Mixing ratio to mixture | 100 : 20 | 100 : 20 | 100 : 20 | 100 : 20 | 100 : 20 | 100 : 20 | 100 : 20 |
| Appearance | 3.6 | 3.9 | 4.2 | 4.4 | 4.1 | 3.8 | 3.3 |
| Texture | 3.0 | 3.6 | 4.1 | 4.4 | 4.2 | 3.9 | 3.6 |

### (Test Example 4)

Breadcrumb mixes 13 to 18 were made similarly to the production examples 1 to 4, except that the mixture compositions were changed as shown in Table 4. As in the test example 1, pork cutlets were obtained with these mixes and then evaluated. Table 4 shows an obtained result. Table 4 shows the result of the making example 1 again. Breadcrumb mixes 13 and 18 in Table 4 are comparative examples which fall outside the scope of the present invention.

**[Table 4]**

| Mixture Composition (mass%) | mix | | | | | | |
|---|---|---|---|---|---|---|---|
| | 13 | 14 | 15 | Production example 1 | 16 | 17 | 18 |
| wheat gluten | 70 | 70 | 70 | 70 | 70 | 70 | 70 |
| Pregelatinized starch | 29.95 | 29.9 | 29.7 | 29 | 27 | 25 | 24 |
| Powdered oil or fat | 0.05 | 0.1 | 0.3 | 1 | 3 | 5 | 6 |
| Total | 100 | 100 | 100 | 100 | 100 | 100 | 100 |
| Mixing ratio of breadcrumbs and mixture | 100 : 20 | 100 : 20 | 100 : 20 | 100 : 20 | 100 : 20 | 100 : 20 | 100 : 20 |
| Appearance | 3.6 | 4.0 | 4.1 | 4.4 | 4.0 | 3.7 | 3.3 |
| Texture | 3.4 | 3.7 | 4.1 | 4.4 | 4.2 | 3.9 | 3.5 |

### (Test Example 5)

Breadcrumb mixes 19 to 26 were made similarly to the production example 1, except that mixing ratios of the breadcrumbs and mixtures were changed. For comparison, breadcrumb mixes 27 to 38 were also made, which had mixture-breadcrumb mixing ratios similar to the breadcrumb mixes 19 to 26 and mixture compositions that differed from the mixes 19 to 26. As in the test example 1, pork cutlets were obtained with these breadcrumb mixes and then evaluated. Tables 5 and 6 show obtained results. Table 5 shows the result of the making example 1 again, and Table 6 shows the results of the mixes 1, 6, 7, and 12 again. In following tables 5 and 6, breadcrumb mixes 1, 6, 7, 12, 19 and 24-38 are all comparative examples which fall outside the scope of the present invention.

**[Table 5]**

| Mixture Composition (mass%) | mix | | | | | | | | |
|---|---|---|---|---|---|---|---|---|---|
| | 19 | 20 | 21 | Product ion example 1 | 22 | 23 | 24 | 25 | 26 |
| Wheat gluten | 70 | 70 | 70 | 70 | 70 | 70 | 70 | 70 | 70 |
| Pregelatinized starch | 29 | 29 | 29 | 29 | 29 | 29 | 29 | 29 | 29 |
| Powdered oil or fat | 1 | 1 | 1 | 1 | 1 | 1 | 1 | 1 | 1 |
| Wheat flour | - | - | - | - | - | - | - | - | - |
| Total | 100 | 100 | 100 | 100 | 100 | 100 | 100 | 100 | 100 |
| Mixing ratio of breadcrumbs and mixture | 100 : 2 | 100 : 5 | 100 : 10 | 100 : 20 | 100 : 25 | 100 : 30 | 100 : 35 | 100 : 40 | 100 : 45 |
| Appearance | 3.2 | 4.0 | 4.3 | 4.4 | 4.3 | 4.2 | 4.1 | 4.0 | 3.3 |
| Texture | 3.3 | 4.0 | 4.2 | 4.4 | 4.3 | 4.1 | 4.4 | 3.9 | 3.2 |

**[Table 6]**

| mixture Composition (mass%) | Mix | | | | | | | | | | | | | | | |
|---|---|---|---|---|---|---|---|---|---|---|---|---|---|---|---|---|
| | 27 | 6 | 28 | 29 | 30 | 7 | 31 | 32 | 33 | 12 | 34 | 35 | 36 | 1 | 37 | I 38 |
| Wheat gluten | 93 | 93 | 93 | 70 | 70 | 70 | 70 | 70 | 33 | 33 | 33 | 17 | 17 | 17 | 17 | 17 |
| Pregelatinized starch | 6 | 6 | 6 | 0.5 | 0.5 | 0.5 | 0.5 | 0.5 | 66 | 66 | 66 | 29 | 29 | 29 | 29 | 29 |
| Powdered oil or fat | 1 | 1 | 1 | 1 | 1 | 1 | 1 | 1 | 1 | 1 | 1 | 1 | 1 | 1 | 1 | 1 |
| Wheat flour | - | - | - | 28.5 | 28.5 | 28.5 | 28.5 | 28.5 | - | - | - | 53 | 53 | 53 | 53 | 53 |
| Total | 100 | 100 | 100 | 100 | 100 | 100 | 100 | 100 | 100 | 100 | 100 | 100 | 100 | 100 | 100 | 100 |
| Mixing ratio of breadcrumbs and mixture | 100 : 2 | 100 : 20 | 100 : 35 | 100 : 2 | 100 : 5 | 100 : 20 | 100 : 30 | 100 : 35 | 100 : 2 | 100 : 20 | 100 : 35 | 100 : 2 | 100 : 5 | 100 : 20 | 100 : 30 | 100 : 35 |
| Appearance | 2.1 | 3.6 | 2.7 | 2.3 | 2.9 | 3.6 | 3.0 | 2.6 | 1.8 | 3.3 | 2.1 | 2.4 | 2.9 | 3.4 | 2.9 | 2.6 |
| Texture | 1.7 | 2.9 | 2.6 | 2.5 | 2.7 | 3.0 | 3.0 | 2.8 | 1.8 | 3.6 | 2.3 | 2.2 | 2.6 | 3.1 | 2.7 | 2.3 |

## Claims

1. A breadcrumb mix comprising breadcrumbs blended with a breadcrumb modifier, the breadcrumb modifier comprising
(a) from 20 to 90 mass% of a protein material,
(b) from 1 to 60 mass% of a thickener, and
(c) from 0.1 to 5 mass% of an oil or fat,
wherein in the total amount of the breadcrumb mix, the contents of the protein material relative to 100 parts by mass of the breadcrumbs is from 2.75 to 22.5 parts by mass, the content of the thickener relative to 100 parts by mass of the breadcrumbs is from 0.5 to 15 parts by mass, and the content of the oil or fat relative to 100 parts by mass of the breadcrumbs is from 0.015 to 1.2 parts by mass,
wherein the protein material is one or more selected from the group consisting of gluten and dried egg white, and the thickener is one or more selected from the group consisting of pregelatinized starch and glucomannan.

2. The breadcrumb mix according to claim 1, wherein the breadcrumb modifier comprising from 55 to 80 mass% of the protein material and from 10 to 40 mass% of the thickener.

3. The breadcrumb mix according to any one of claims 1 or 2, wherein the oil or fat is a vegetable oil or fat.

4. The breadcrumb mix according to any one of claims 1 to 3, wherein the breadcrumb modifier comprises from 80 to 100 mass% in total of the protein material, the thickener, and the oil or fat.

5. The breadcrumb mix according to any one of claims 1 to 4, wherein the breadcrumb modifier is a powder.

6. The breadcrumb mix according to claim 5, wherein the powder has an average particle size of from 20 to 500 µm.

7. A method of making a breadcrumb mix according to any one of claims 1 to 6, comprising blending 100 parts by mass of breadcrumbs with from 5 to 40 parts by mass of the breadcrumb modifier.

8. The method according to claim 7, wherein the breadcrumb mix comprises 71 to 95 mass% of the breadcrumbs.

9. The method according to any one of claims 7 or 8, comprising:
mixing the protein material, the thickener, and the oil or fat to prepare the breadcrumb modifier as defined in any one of claims 1 to 6; and
blending from 5 to 40 parts by mass of the breadcrumb modifier with 100 parts by mass of the breadcrumbs.

10. The method according to claim 9, wherein the breadcrumb modifier is attached to the surfaces of the breadcrumbs by blending the breadcrumbs with the breadcrumb modifier.

11. The method according to any one of claims 7 to 10, wherein the mix has an average particle size of from 100 µm to 7 mm.

12. A method of making breaded and cooked food, comprising:
directly attaching the breadcrumb mix made by the method according to any one of claims 7 to 11 to the surface of a food item; and
baking or frying, using oil, the food item to which the breadcrumb mix has been attached.

## Patentansprüche

1. Paniermehlmischung, die Paniermehl enthält, das mit einem Paniermehlmodifikator vermischt ist, wobei der Paniermehlmodifikator
(a) 20 bis 90 Massenprozent eines Proteinmaterials,
(b) 1 bis 60 Massenprozent eines Verdickungsmittels und
(c) 0,1 bis 5 Massenprozent eines Öls oder Fetts enthält,
wobei in der Gesamtmenge der Paniermehlmischung der Gehalt des Proteinmaterials bezogen auf 100 Massenteile Paniermehl 2,75 bis 22,5 Massenteile beträgt, der Gehalt des Verdickungsmittels bezogen auf 100 Massenteile Paniermehl 0,5 bis 15 Massenteile beträgt und der Gehalt des Öls oder Fetts bezogen auf 100 Massenteile Paniermehl 0,015 bis 1,2 Massenteile beträgt,
wobei das Proteinmaterial ein oder mehrere Stoffe ist, die aus der Gruppe ausgewählt sind, die aus Gluten und getrocknetem Eiweiß besteht, und das Verdickungsmittel ist eines oder mehrere, ausgewählt aus der Gruppe bestehend aus vorverkleisterter Stärke und Glucomannan.

2. Die Paniermehlmischung nach Anspruch 1, wobei der Paniermehlmodifikator 55 bis 80 Massen-% des Proteinmaterials und 10 bis 40 Massen-% des Verdickungsmittels umfasst.

3. Die Paniermehlmischung nach einem der Ansprüche 1 oder 2, wobei das Öl oder Fett ein Pflanzenöl oder -fett ist.

4. Die Paniermehlmischung nach einem der Ansprüche 1 bis 3, wobei der Paniermehlmodifikator insgesamt 80 bis 100 Massen-% des Proteinmaterials, des Verdickungsmittels und des Öls oder Fetts umfasst.

5. Die Paniermehlmischung nach einem der Ansprüche 1 bis 4, wobei der Paniermehlmodifikator ein Pulver ist.

6. Die Paniermehlmischung nach Anspruch 5, wobei das Pulver eine durchschnittliche Partikelgröße von 20 bis 500 µm aufweist.

7. Verfahren zur Herstellung einer Paniermehlmischung nach einem der Ansprüche 1 bis 6, umfassend das Mischen von 100 Massenteilen Paniermehl mit 5 bis 40 Massenteilen des Paniermehlmodifikators.

8. Verfahren nach Anspruch 7, wobei die Paniermehlmischung 71 bis 95 Massenprozent Paniermehl umfasst.

9. Verfahren nach einem der Ansprüche 7 oder 8, umfassend:
Mischen des Proteinmaterials, des Verdickungsmittels und des Öls oder Fetts zur Herstellung des Paniermehlmodifikators gemäß einem der Ansprüche 1 bis 6; und
Mischen von 5 bis 40 Massenteilen des Paniermehlmodifikators mit 100 Massenteilen Paniermehl.

10. Verfahren nach Anspruch 9, wobei der Paniermehlmodifikator an die Oberfläche des Paniermehls gebunden wird, indem das Paniermehl mit dem Paniermehlmodifikator vermischt werden.

11. Verfahren nach einem der Ansprüche 7 bis 10, wobei die Mischung eine durchschnittliche Partikelgröße von 100 µm bis 7 mm aufweist.

12. Verfahren zur Herstellung panierter und gekochter Lebensmittel, umfassend: direktes Anbringen der Paniermehlmischung, die nach dem Verfahren nach einem der Ansprüche 7 bis 11 hergestellt wurde, an der Oberfläche eines Lebensmittels; und
Backen oder Braten des Lebensmittels, an das die Paniermehlmischung gebunden wurde, unter Verwendung von Öl.

## Revendications

1. Mélange de chapelures comprenant des chapelures mélangées à un modificateur de chapelure, le modificateur de chapelure comprenant
(a) de 20 à 90 % en masse d'une matière protéique,
(b) de 1 à 60 % en masse d'un épaississant, et
(c) de 0,1 à 5 % en masse d'une huile ou d'une graisse,
dans lequel, dans la quantité totale du mélange de chapelures, la teneur en matière protéique par rapport à 100 parties en masse des chapelures est de 2,75 à 22,5 parties en masse, la teneur en épaississant par rapport à 100 parties en masse des chapelures est de 0,5 à 15 parties en masse, et la teneur en huile ou en graisse par rapport à 100 parties en masse des chapelures est de 0,015 à 1,2 partie en masse,
dans lequel la matière protéique est un ou plusieurs éléments choisis dans le groupe constitué par le gluten et le blanc d'œuf séché, et l'épaississant est un ou plusieurs éléments choisis dans le groupe constitué par l'amidon prégélatinisé et le glucomannane.

2. Mélange de chapelures selon la revendication 1, dans lequel le modificateur de chapelure comprend de 55 à 80 % en masse de la matière protéique et de 10 à 40 % en masse de l'épaississant.

3. Mélange de chapelures selon l'une des revendications 1 ou 2, dans lequel l'huile ou la graisse est une huile ou une graisse végétale.

4. Mélange de chapelures selon l'une des revendications 1 à 3, dans lequel le modificateur de chapelure comprend de 80 à 100 % en masse au total de la matière protéique, de l'épaississant et de l'huile ou la graisse.

5. Mélange de chapelures selon l'une des revendications 1 à 4, dans lequel le modificateur de chapelure est une poudre.

6. Mélange de chapelures selon la revendication 5, dans lequel la poudre a une taille moyenne de particule de 20 à 500 µm.

7. Procédé de fabrication d'un mélange de chapelures selon l'une des revendications 1 à 6, comprenant le mélange de 100 parties en masse de chapelures avec de 5 à 40 parties en masse du modificateur de chapelure.

8. Procédé selon la revendication 7, dans lequel le mélange de chapelures comprend 71 à 95 % en masse des chapelures.

9. Procédé selon l'une des revendications 7 ou 8, comprenant :
le mélange de la matière protéique, de l'épaississant et de l'huile ou la graisse pour préparer le modificateur de chapelure tel que défini dans l'une des revendications 1 à 6 ; et le mélange de 5 à 40 parties en masse du modificateur de chapelure avec 100 parties en masse des chapelures.

10. Procédé selon la revendication 9, dans lequel le modificateur de chapelure est fixé aux surfaces des chapelures par le mélange des chapelures avec le modificateur de chapelure.

11. Procédé selon l'une des revendications 7 à 10, dans lequel le mélange a une taille moyenne de particule de 100 µm à 7 mm.

12. Procédé de fabrication d'aliments panés et cuits, comprenant :
la fixation directe du mélange de chapelures, réalisée par le procédé selon l'une des revendications 7 à 11, à la surface d'un aliment ; et
la cuisson ou la friture, à l'aide d'huile, de l'aliment auquel le mélange de chapelures a été fixé.
